# EUROPEAN PATENT SPECIFICATION

(11) **EP 0 992 440 B1**
(45) Date of publication and mention of the grant of the patent: **03.03.2004**
(21) Application number: 99119748.4
(22) Date of filing: 06.10.1999
(51) Int. Cl.: B65G 15/60, B65G 39/12, B65G 15/08

(54) **Air-floating belt conveyor**
Bandförderer mit Luftkissen
Convoyeur à bande à coussin d'air

(30) Priority: 07.10.1998 JP 28496398
(43) Date of publication of application: 12.04.2000
(73) Proprietor: Bridgestone Corporation, Tokyo (JP)
(72) Inventor: Nishikita, Yukinobu, Kodaira-shi, Tokyo (JP); Kuroda, Kimihide, Kitakyushu-shi, Fukuoka-ken (JP); Sumino, Shinichi, Kitakyushu-shi, Fukuoka-ken (JP); Shiraishi, Motohiro, Yukuhashi-shi, Fukuoka-ken (JP)
(74) Representative: Dr. Weitzel & Partner

(56) References cited:
- PATENT ABSTRACTS OF JAPAN vol. 1998, no. 14, 31 December 1998 (1998-12-31) & JP 10 250813 A (UBE IND LTD), 22 September 1998 (1998-09-22)

## Description

### BACKGROUND OF THE INVENTION

The present invention relates to an air-floating belt conveyor, and especially a belt conveyor which has a guide roller for guiding an endless conveyor belt smoothly.

A belt wound between a pair of pulleys is formed as a trough by passing through a support tube, and compressed air is introduced into the belt support tube. The belt is slightly floated to convey granular or powdery material. Such an air-floating belt conveyor is known. (See, for example, JP-A-10250813).

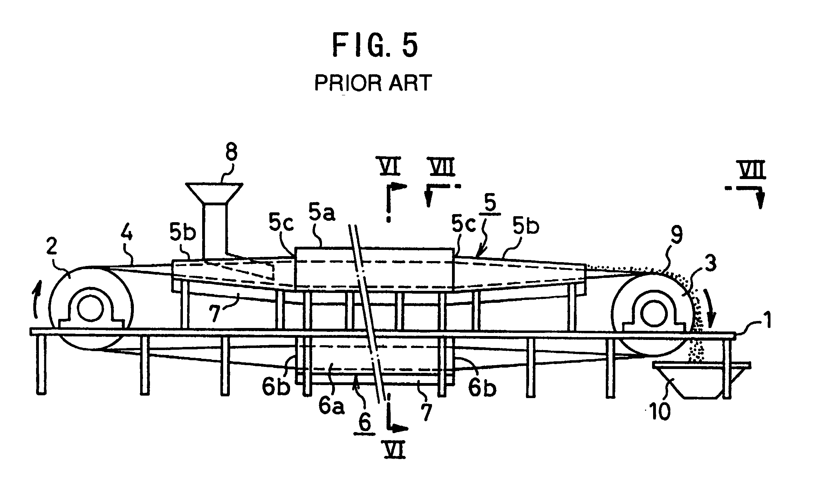

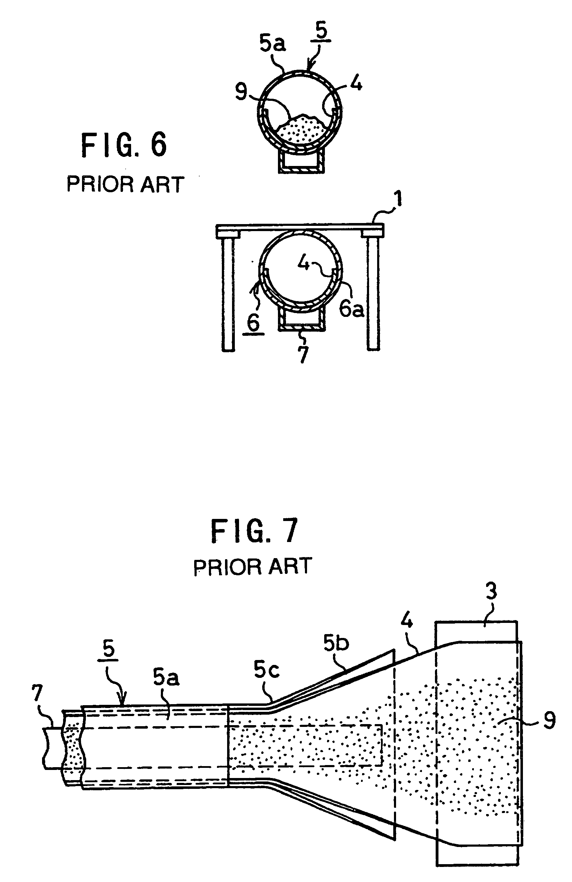

Figs. 5 to 7 illustrate a conventional air-floating belt conveyor in which an endless belt 4 is wound between a drive pulley 2 and a driven pulley 3 at the ends of a support plate 1 and runs in a direction of arrows by drive means (not shown).

The first support tube 5 for the belt 4 is provided above the support plate 1, and comprises a middle tubular portion 5a and unfolding portions 5b which are gradually unfolded towards the ends. Under the support plate 1, a second support tube 6 which comprises a tubular portion 6a is provided. Air ducts 7 are provided on the lower surfaces of the support tubes 5,6 and communicate with each other via an air tube(not shown).

While the belt 4 passes through the unfolding portion 5b, it is gradually rolled up to a trough, onto which granular material is thrown by an upper chute 8. The belt 4 is still formed like a trough in the tubular portion, and returns to a flat form while it passes through the unfolding portion 5b. The material 9 is thrown into a hopper 10 during rotation around the driven pulley 3. The belt 4 is rolled up into a trough again, and returns to a flat form after it passes through the second support tube 6 to come back to the drive pulley 2.

The belt 4 on which the material 9 is put is floated by compressed air which is blown from the air duct 7, thereby decreasing frictional resistance during running so that the material 9 may be easily conveyed by small power.

When the belt 4 is rolled up through the upper and lower support tubes 5,6, maximum deformation is caused at the side edges of the belt 4 with respect to a flat form which is wound around the pulley, so that strong tension is applied to the side edge. Thus, the side edge is likely to become a straight line, or the belt is likely to return to a flat form.

Therefore, when the belt 4 passes into the first support tube 5, it strongly presses bent portions 5c of the entrance and exit, and when it passes through the second support tube 6, it strongly presses an end face 6b of the tubular portion 6a to interrupt smooth running of the belt 4 by frictional resistance and to wear the side edges of the belt 4 to decrease its durability.

### SUMMARY OF THE INVENTION

In view of the foregoing disadvantages in the prior art, it is an object to provide an air floating belt conveyor to decrease wear of a belt and to run the belt smoothly.

According to the present invention, this object is achieved in an air floating conveyor having the features defined in claim 1.

Owing to the guide rollers, when the belt passes through the support tube, it runs without contact to a bent portion and an unfolding portion to decrease frictional resistance, thereby assuring smooth running and increasing durability of the belt.

### BRIEF DESCRIPTION OF THE DRAWINGS

The features and advantages of the invention will become more apparent from the following description with respect to embodiments as shown in appended drawings wherein:
Fig. 1 is a side elevational view of the first embodiment of an air floating belt conveyor according to the present invention;
Fig. 2 is a top plan view seen from the arrows II-II in Fig. 1;
Fig. 3 is a view seen from the arrows III-III in Fig. 2;
Fig. 4 is a view of the second embodiment, similar to Fig. 3;
Fig. 5 is a side elevational view of a conventional air floating belt conveyor;
Fig. 6 is a vertical sectional view taken along the line VI-VI in Fig. 5; and
Fig. 7 is a top plan view seen from the arrows VII-VII in Fig. 5.

### DETAILED DESCRIPTION OF PREFERRED EMBODIMENTS

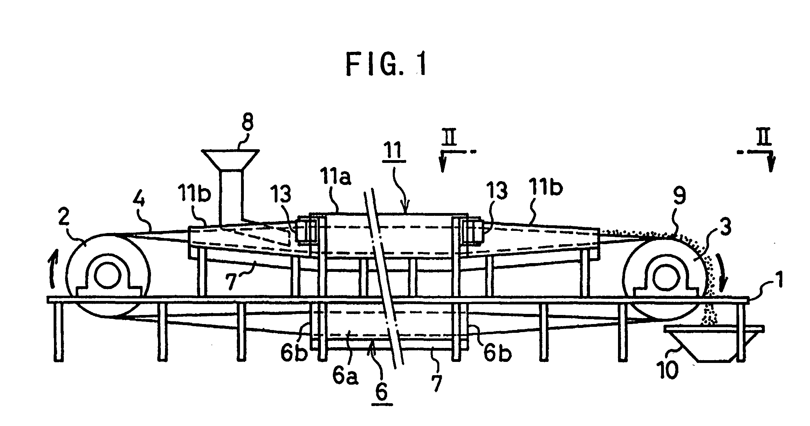

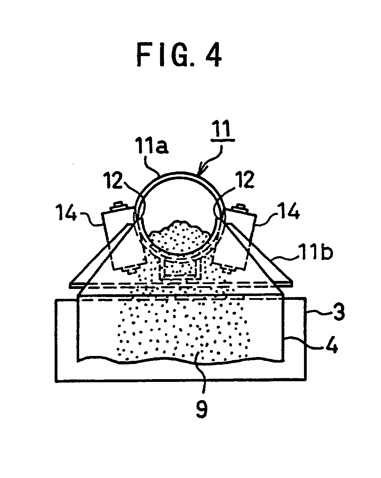

Figs. 1 to 3 illustrate the first embodiment of the present invention. The same numerals are allotted to the same members as those in the prior art in Figs. 5 to 7. The same is applied to the second embodiment in Fig. 4.

A first support tube 11 corresponding to the first support tube 5 in the prior art comprises a tubular portion 11a and an unfolding portion 11b. At a position corresponding to the bent portions 5c in the prior art, there are formed recesses 12, in which a pair of vertical guide rollers 13,13 are engaged with a play. The guide rollers 13,13 are slightly projected into the first support tube 11.

The side edges of the belt 4 which passes through the tubular portion 11a are pressed inwards slightly by the guide rollers 13,13. Thus, the belt 4 passes without getting in touch with a portion such as 5c in the prior art of the first support tube 11. Therefore, there is no increase in rotational friction of the belt 4 or no wear at the side edge of the belt 4.

As shown in Fig. 1, guide rollers 13 are provided at an entrance of the tubular portion as well.

Guide rollers may be also provided at an entrance and exit of the tubular portion 6a of a second support tube 6 so as to prevent the belt 4 from contacting the lower tubular portion 6a.

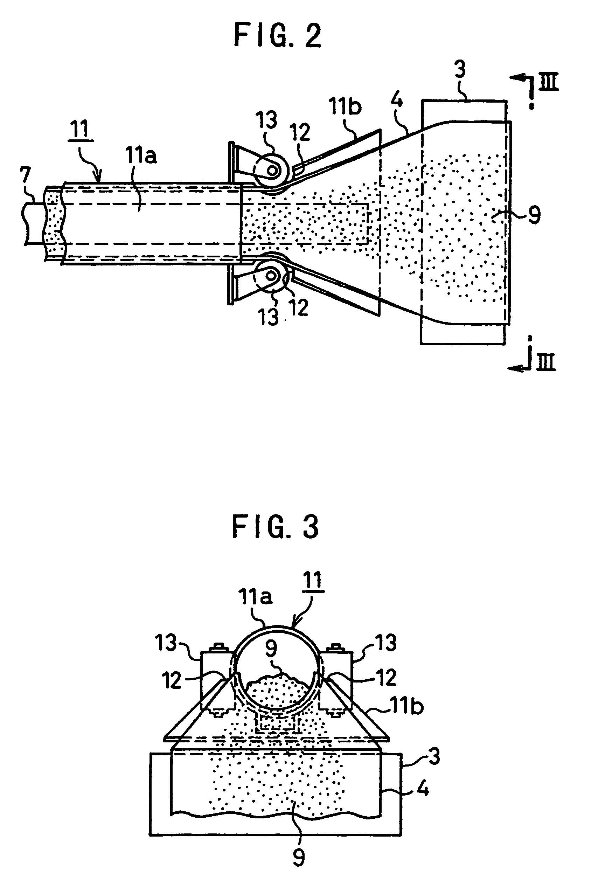

Fig. 3 illustrates the second embodiment of the present invention, in which a pair of guide rollers 14,14 are inclined so that distance between the guide rollers 14,14 may become narrower downwards. The sides of the belt 4 which passes between the guide rollers 14,14 are curved upwards, so that the belt 4 easily gets away from the first support tube 11 certainly to assure smooth running with less friction.

In the foregoing embodiments, to support the belt 4, the first and second support tubes 11, 6 are employed, but a trough-shaped member with no upper half may be employed.

## Claims

1. An air floating belt conveyor which comprises a flat belt (4), a pair of pulleys (2, 3) around which said belt (4) is wound, and a support tube (11) which comprises a tubular portion (11a) and unfolding portions (11b) between said pair of pulley (2, 3), said belt (4) being changed into a trough through one of said unfolding portions (11 b) and unfolded through the other of said unfolding portions (11b) to a flat form, said belt (4) running in said support tube (11) while the belt (4) is slightly floated by compressed air which is blown into said support tube (11), and **characterized in that**:
a pair of guide rollers (13,14) is provided at the end of said tubular portion (11a) of the support tube (11), the guide rollers (13, 14) being slightly projected into the support tube (11) to press side edges of the belt (4) horizontally.

2. An air floating belt conveyor as defined in claim 1 wherein said pair of guide rollers (13, 14) are inclined so that distance between said guide rollers (13, 14) may be narrower downwards.

## Patentansprüche

1. Ein Förderer mit einem auf Luft schwimmenden Band, welcher ein flaches Band (4) umfasst, ferner ein Paar von Riemenscheiben (2, 3), um welche das gesagte Band (4) herumgewunden ist, und eine Tragröhre (11), welche einen röhrenförmigen Bereich (11a) und Entfaltungsbereiche (11 b) aufweist, zwischen dem gesagten Paar von Riemenscheiben (2, 3), wobei das gesagte Band (4) in eine Rinne durch einen der gesagten Entfaltungsbereiche (11b) geändert wird und durch den anderen der gesagten Entfaltungsbereiche (11 b) in eine flache Form entfaltet wird, wobei das gesagte Band (4) in der gesagten Tragröhre (11) läuft, während das Band (4) leicht schwimmend durch komprimierte Luft angehoben wird, welche in die gesagte Tragröhre (11) eingeblasen wird, und **dadurch gekennzeichnet, dass**:
ein Paar von Führungswalzen (13, 14) an dem Ende des gesagten röhrenförmigen Bereiches (11 b) der Tragröhre (11) vorgesehen ist,
wobei die Führungswalzen (13, 14) leicht in die Tragröhre (11) hineinragen, um die Seitenkanten des Bandes (4) horizontal zu drücken.

2. Ein Förderer mit einem auf Luft schwimmenden Band, wie beansprucht in Anspruch 1, wobei das gesagte Paar von Führungswalzen (13, 14) geneigt ist, so dass der Abstand zwischen den gesagten Führungswalzen (13, 14) nach unten schmaler werden kann.

## Revendications

1. Convoyeur à bande à sustentation par air comprenant une bande plate (4), une paire de poulies (2, 3) autour desquelles ladite bande (4) est enroulée, et un tube de support (11) qui comprend une partie tubulaire (11 a) et des parties de pliage (11 b) entre ladite paire de poulies (2, 3), ladite bande (4) étant changée en auge par l'une desdites parties de pliage (11 b) et dépliée par l'autre partie de pliage (11 b) pour être remise à plat, ladite bande (4) circulant dans ledit tube de support (11) tandis que la bande (4) est légèrement sustentée par de l'air comprimé injecté dans ledit tube de support (11 ), **caractérisé en ce qu'**il est prévu une paire de galets de guidage (13, 14) à l'extrémité de ladite partie tubulaire (11a) du tube de support (11), lesquels galets de guidage (13, 14) font légèrement saillie dans le tube de support (11) pour presser les bords latéraux de la courroie (4) à l'horizontale.

2. Convoyeur à bande à sustentation par air selon la revendication 1, **caractérisé en ce que** ladite paire de galets de guidage (13, 14) est inclinée de telle sorte que la distance entre lesdits galets de guidage (13, 14) puisse être plus étroite vers le bas.
